Europäisches Patentamt

(19) European Patent Office

Office européen des brevets

(11) EP 0 779 744 A2

(12) EUROPEAN PATENT APPLICATION

(43) Date of publication:
18.06.1997 Bulletin 1997/25

(51) Int. Cl.⁶: H04N 7/50

(21) Application number: 96118874.5

(22) Date of filing: 26.11.1996

(84) Designated Contracting States:
DE FR GB IT

(30) Priority: 06.12.1995 EP 95119207
12.03.1996 EP 96103853

(71) Applicant: THOMSON multimedia S.A.
92400 Courbevoie (FR)

(72) Inventors:
• Canfield, Barth
  Fishers, IN 46038 (US)
• Rominger, Friedrich
  78086 Brigachtal (DE)
• Teichner, Detlef
  78126 Königsfeld (DE)
• Kessler, Rolf
  78048 Villingen (DE)
• Graf, Andreas
  78056 VS-Schwenningen (DE)

(74) Representative: Hartnack, Wolfgang, Dipl.-Ing.
Deutsche Thomson-Brandt GmbH
Patentabteilung
Göttinger Chaussee 76
30453 Hannover (DE)

(54) Method and apparatus for decoding digital video signals

(57) ISO/IEC have standardized a video bit stream representing a compression method for standard resolution as well as high resolution video signals and pictures, the so-called MPEG-2 standard. MPEG-2 provides for three different picture coding types: Intra, Predicted and Bidirectionally predicted or interpolated frames or fields. In P and B frames or fields macroblocks can be coded intraframe or intrafield, respectively, if motion prediction does not give good results. The decision has to be made in the encoder with criteria to be determined by the implementation. In addition, MPEG-2 allows for frame or field based DCT which requires sorting of lines and another decision to be made by the encoder.

A real-time MPEG-2 video encoder has been developed based on a set of dedicated IC designs. The processing functions are organized in three main ICs or stages. A preprocessor (301) contains all input and pre-processing functions like picture format conversion which are required for data compression. A coarse (303) and fine (305) motion estimator contains all motion estimation and motion prediction functions and a bit stream encoder (307) includes all bitstream generation for MPEG-2 encoding like DCT, quantizer, inverse quantizer, inverse DCT, zigzag scanning, and RLC/VLC encoding, but does not include motion prediction.

Fig.3

**Description**

The present invention relates to a method and to an apparatus for video data compression and bitstream encoding.

Background

ISO/IEC have standardized a video bit stream representing video compression methods for standard resolution as well as high resolution video signals and pictures, the so-called MPEG-2 standard.

MPEG-2 provides for three different picture coding types: Intra (I), Predicted (P) and Bidirectionally predicted or interpolated (B) frames or fields. Still, in P and B frames or fields, macroblocks can be coded intraframe or intrafield, respectively, if motion prediction does not give good results. The decision has to be made in the encoder with criteria to be determined by the implementation. In addition, MPEG-2 allows for frame or field based DCT (Discrete Cosine Transform), which requires sorting of lines and another decision to be made by the encoder.

In digital video broadcasting applications, decoders are usually needed in a high volume while only a small number of encoders are employed to provide the service. A typical configuration is given by the DirecTv satellite service in the USA, where MPEG-2 encoders for about 150 simultaneous programs provide a nationwide broadcasting service. This requires relatively cheap decoders whereas encoders can include more exhaustive circuitry and can be more expensive. MPEG-2 video encoding and decoding can be implemented in an asymmetrical manner in which encoders include a high degree of complex circuitry while decoders must include only that range of functionality absolutely required to decode valid bit streams.

For that purpose, MPEG defines the syntax and the semantics of the bit stream and a so-called System Target Decoder. The implementation of the encoder is not ruled by the standard. This allows to built relatively simple encoders for applications with low demands on picture quality, as well as very complex encoders for high quality requirements.

For video broadcasting and entertainment applications reference levels for picture quality are set by existing video standards. For broadcasting of live events realtime operation of the encoder is a must. In order to cope with all different digital video applications and their respective requirements, the so-called MPEG Committee (Working Group 11 of ISO/IEC) has defined a set of Profiles and Levels. Profiles determine a certain subset of encoding tools belonging to the MPEG-2 standard. Different tools are used for specific encoding methods and applications. Levels restrict the vast ranges of parameters to those numbers which are used in common applications such as video broadcasting or video transmission over networks.

For video broadcasting services standard resolution video is related to ITU-R Recommendation 601 specifications or subsets of these, and can be handled by MPEG-2 Main Profile at Main Level (MP@ML). High definition video can be covered by the parameter sets defined in the High Levels of MPEG-2 (f.e. MP@HL).

The Main Profile comprises compression methods for video in the so-called 4:2:0 format, and it defines a variety of motion compensation and encoding modes, which are needed for high compression ratios. Motion compensation in the MP is based on frame and field based prediction in forward and backward direction, and includes refinements specifically targeted for interlaced video signals, such as the Dual Prime technique. For encoding, the MP allows frame and field based DCT, linear and non-linear quantization, standard and alternative zigzag scanning, and more.

Digital video broadcasting services will be based on bit rates in the range from as low as 1Mbit/s up to about 10Mbit/s. Raw data rates of video signals digitized according to the ITU-R Recommendation 601 comprise about 166Mbit/s, without blanking intervals, clock and synchronization. For a typical bit rate of 4Mbit/s, which shall provide picture quality similar to existing NTSC and PAL video standards, a compression factor in the range of 40 is needed.

Compression ratios in this range are relatively easy to achieve for video signals which originate from film material, due to their non-interlaced nature and their low temporal repetition rate of 24Hz. Much more demanding requirements come from real video signals originated from video cameras, especially in sequences with rapid and random motion. For adequate reproduction of such pictures at high compression ratios, all motion prediction and encoding alternatives provided by MPEG-2 MP are mandatory.

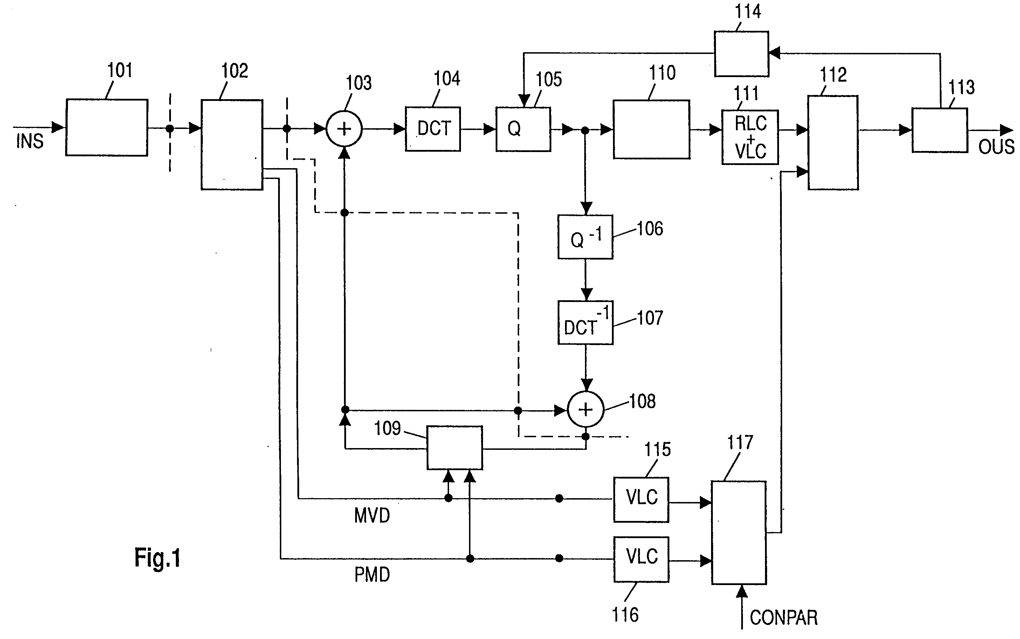

The principle functional blocks for encoding MPEG-2 video data streams according to the Main Profile MP from digital video signals are shown in Fig. 1. In such basic encoder arrangement, which is well-known in the art, digitized video signals are fed into a picture organization block 101, which rearranges the line and field wise luminance and chrominance signals in a macroblock and block order as used for a subsequent motion estimation and coding. Reorganization of the field or frame sequence of such video data is also done in block 101. A motion estimation stage 102 calculates suitable macroblock correspondences between consecutive pictures in form of motion vectors for different types of prediction, as permitted and supported by the syntax and semantics of the ISO/IEC 13818-2 standard, i.e. frame prediction, field prediction, and dual prime prediction. Macroblocks of 16*16 pixels are forwarded to a combiner 103 and motion vector parameters or data MVD and prediction mode descriptors PMD are led to a predictor 109, to a first VLC (variable length coding) encoder 115 for the motion vector parameters, and to a second VLC encoder 116 for the prediction modes. For predicted macroblocks (P and B pictures) the combiner 103 takes the macroblocks from the motion estimation stage 102 and from the predictor 109 and calculates difference signals consisting of pixel differences for each pixel of the respective macroblocks. These difference signals are fed to a DCT stage 104 and transformed for each 8*8 pixel block into corresponding arrays of 8*8 DCT coefficients. In case of non-predicted macroblocks (I pictures) passes the output from stage 102 to DCT stage 104 without forming difference signals.

The coefficient arrays are forwarded to a quantization stage 105 comprising tables for dividing each coefficient according to a respective table entry and a scaling factor. The output of the quantizer 105 is forwarded to a zigzag scan unit 110 and to an inverse quantizer 106. The inverse quantizer performs the inverse operation of quantizer 105 in that it multiplies each input value with the respective table entry and scaling factor. Output signals of inverse quantizer 106 are led to the inverse DCT block 107 in which 8*8 arrays of DCT coefficients are inversely transformed into 8*8 blocks of pixel values. These pixel value blocks are forwarded to an adder 108 in which they are added to the corresponding output signals of predictor 109. Predictor stage 109 receives its input signals from the adder 108. Predictor 109 stores the input signals macroblock wise and performs translational shifts of macroblocks in the respective picture array, i.e. motion compensation, according to the motion vectors and predictor values computed previously by motion detector 102. The output signals of this prediction procedure are forwarded to adder 108 and to combiner 103.

Output signals of the quantizer 105 in form of quantized DCT coefficients are lined up in unit 110 by zigzag scanning and are then forwarded to a RLC/VLC unit (run length coding) 111 which comprises all necessary RLC/VLC tables including escape codes of ISO/IEC 13818-2. The output signals of RLC/VLC stage 111 represent compressed picture data in a bit sequential data stream. In VLC encoders 115 and 116 similar MPEG VLC transformations are performed for motion vectors and prediction modes. These transformed signals are inputted into a MPEG header generation unit 117 which also inserts control parameters CONPAR from an external controller device such as a personal computer. The completed header signals are led to a packetizer and multiplexer stage 112 which also receives the RLC/VLC data corresponding to the picture content from the RLC/VLC unit 111. In stage 112 all data is aligned and ordered according to ISO/IEC 13818-2 or 11172-2. Output signals of stage 112 are forwarded to a buffer 113, e.g. a RAM, which stores all incoming data and measures the filling status. In respect to the actual filling status buffer 113 feeds a signal to a rate control unit 114, which again calculates corresponding quantization scaling parameters to be applied in quantization stage 105. The other output OUS of buffer 113 is the compressed data stream of the encoder conforming to ISO/IEC 13818-2 or 11172-2 specifications or to similar data compression standards and to desired constant or variable bit rates.

Chrominance is encoded correspondingly whereby motion estimation is normally carried out for luminance only.

## Summary of the Invention

It is one object of the invention to disclose a method for scalable MPEG-2 encoding using a chip set with a minimum number of chips and an optimum partition of the required encoder functions with respect to the specific chips. This object is achieved by the method disclosed in claim 1.

It is a further object of the invention to disclose a method for MPEG-2 encoding with forward and backward motion estimation using several coarse motion estimation chips and fine motion estimation chips to which the forward and backward motion estimation is assigned in an optimum way. This object is achieved by the method disclosed in claim 7.

It is a further object of the invention to disclose an apparatus which utilizes the inventive method. This object is achieved by the apparatus disclosed in claim 10.

The invention relates to video data compression and bit-stream encoding, conforming in particular to the MPEG-2 and MPEG-1 Coding of Moving Pictures Standard (ISO/IEC 13818-2 and 11172-2), and is based on a VLSI architecture and can be used in conjunction with standard controller circuits. The invention is tailored to provide high speed computation as needed for real time execution of MPEG-2 video encoding algorithms.

A real-time MPEG-2 video encoder has been developed based on a set of dedicated IC designs. The encoder compresses video pictures according to ITU-R 601 recommendation into bit streams from e.g. 1Mbit/s to 15Mbit/s according to the specifications of the MPEG-2 video standard, Main Profile at Main Level (MP@ML). Other input formats can be handled, including various HDTV source formats, which can be converted into bit streams of the Main Profile at High Level.

The main functionality of the encoder consists of a preprocessing stage, a motion estimation stage and a bit stream encoding stage. These functions are supported by specific ICs: a preprocessor circuit, a coarse and a fine motion estimation IC and a bit stream encoder. Each of the ICs controls an external memory space which can be realized with e.g. conventional DRAM parts. The chip set is controlled by standard external microcontrollers and includes on-chip RISC machines for flexible reconfiguration.

The implementation of the encoder is not bound by the MPEG-2 video standard (ISO/IEC 13818-2). With this inventive MPEG-2 chip set, complexity and quality are scalable. This allows the construction of relatively simple encoders for applications with low demands on picture quality, as well as very complex encoders for high quality requirements. Based on the inventive architecture, several processors of the same type can be used in parallel to increase processing power. This provides for all encoding features specified in the MPEG-2 Main Profile, plus additional functionality which is not subject to that standardization.

Input signal formats are e.g. 576 lines/frame at 25 frames/sec, or 480 lines/frame at 29.97 frames/sec, with luminance Y and chrominance $C_b$, $C_r$ in 4:2:2 format.

An MPEG-2 MP encoder does not need to provide all compression techniques and the full choice of MP functionality, as long as it provides a valid bitstream. This allows some simplifications.

The processing functions required for MPEG-2 encoding are organized in three main ICs or stages. A preprocessor contains all input and pre-processing functions like picture format conversion which are required for data compression. A motion estimator contains all motion estimation and motion prediction functions and a bit stream encoder includes all bitstream generation for MPEG-2 encoding like DCT, quantizer, inverse quantizer, inverse DCT, zigzag scanning, and RLC/VLC encoding, but does not include motion prediction.

In principle, the inventive method is suited for encoding digital video signals using video signal pre-processing, motion estimation, and an encoding loop including a transformation step, a quantization step, an inverse quantization step, an inverse transformation step, a reconstruction step, and a pixel block prediction step in which motion information derived from said motion estimation is used for the prediction, wherein difference signals between pre-processed pixel block data and predicted pixel block data and/or pre-processed pixel block data as such can be processed in said transformation step and the output signals of said quantization step are further processed to derive therefrom encoded video signals including information derived from said motion information, wherein the encoding is carried out using:

- a first integrated circuit for pre-processing input picture signals including data re-ordering and to which first picture data memory means are assigned;
- at least one integrated circuit for carrying out said motion estimation and said prediction step and to which second picture data memory means are assigned which are used for said motion estimation and for said prediction step;
- a further integrated circuit for carrying out at least said transformation, quantization, inverse quantization, inverse transformation and reconstruction steps,

wherein said first integrated circuit transfers via a first bus luminance and chrominance picture data to said integrated circuit for carrying out said motion estimation and said prediction step and this circuit exchanges luminance and chrominance picture data with said further integrated circuit, and wherein said first and said further integrated circuit and said integrated circuit for carrying out at least said transformation, quantization, inverse quantization, inverse transformation, and reconstruction steps are controlled via a common bi-directional bus by controlling means.

Advantageous additional embodiments of the inventive method are resulting from the respective dependent claims.

In principle the inventive apparatus is suited for encoding digital video signals using video signal pre-processing, motion estimation, and an encoding loop including transformation, quantization, inverse quantization, inverse transformation, reconstruction, and pixel block prediction in which motion information derived from said motion estimation is used for the prediction, wherein difference signals between pre-processed pixel block data and predicted pixel block data and/or pre-processed pixel block data as such can be processed in said transformation and the output signals of said quantization are further processed to derive therefrom encoded video signals including information derived from said motion information, and includes:

- a first integrated circuit for pre-processing input picture signals including data re-ordering and to which first picture data memory means are assigned;
- at least one integrated circuit for carrying out said motion estimation and said prediction and to which second picture data memory means are assigned which are used for said motion estimation and for said prediction;
- a further integrated circuit for carrying out at least said transformation, quantization, inverse quantization, inverse transformation, and reconstruction,

wherein said first integrated circuit is connected via a first bus transferring luminance and chrominance picture data to said integrated circuit for carrying out said motion estimation and said prediction and this circuit is connected for exchanging luminance and chrominance picture data with said further integrated circuit, and wherein said first and said further integrated circuit and said integrated circuit for carrying out at least said transformation, quantization, inverse quantization, inverse transformation, and reconstruction are connected via a common bi-directional bus with controlling means.

Advantageous additional embodiments of the inventive apparatus are resulting from the respective dependent claims.

Drawings

Preferred embodiments of the invention are described with reference to the accompanying drawings, which show in:

Fig. 1     principle functional blocks for encoding MPEG-2 video data streams;

Fig. 2     block diagram of basic embodiment of the invention;

Fig. 3     example for a more detailed embodiment of the architecture;

Fig. 4     further example with more elaborate motion estimation functions and a circuit for pre-analysis functions;

Fig. 5     further example with a more detailed embodiment of the controller section;

Fig. 6     simplified embodiment of the architecture;

Fig. 7     partitioning of pictures with higher resolution;

Fig. 8     block diagram for the overall architecture for processing higher resolution pictures;

Fig. 9     embodiment of Fig. 8 in more detail;

Fig. 10     processing order for macroblocks, in particular within the stripes of Fig. 7;

Fig. 11     synchronization signals.

## Preferred embodiments

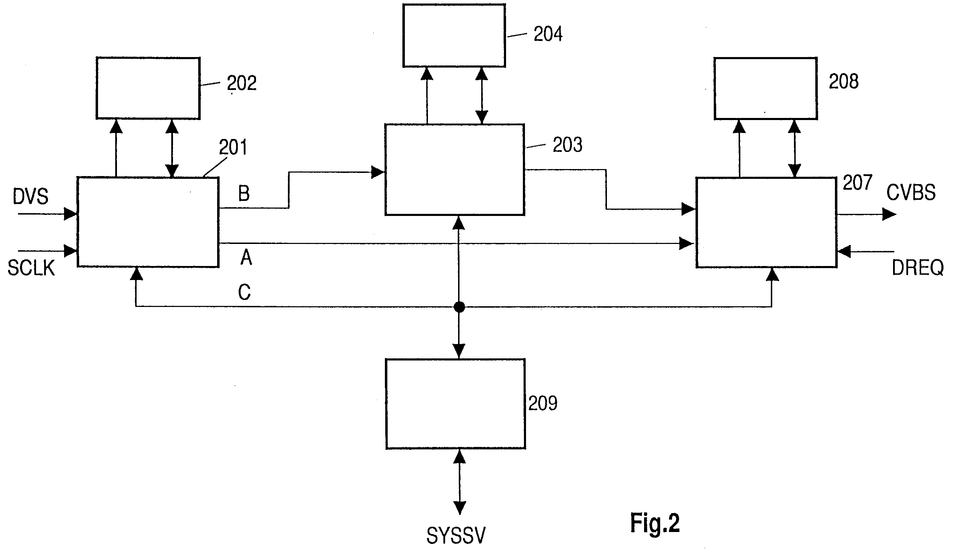

It is the gist of this invention that the same functionality as described with regard to Fig. 1 can be achieved with an architecture as described in connection with Fig. 2 and the further figures. In this architecture the processing functions required for MPEG-2 encoding are organized in three main ICs or stages to each of which a memory is assigned. Preprocessing stage 201 contains all input and pre-processing functions required for data compression, i.e. block 101 of Fig. 1.

Motion estimation stage 203 contains all motion estimation and motion prediction functions, i.e. circuits 102 and 109 of Fig. 1. Thereby motion vector generation and motion vector application are on the same chip and the picture data stored on the accompanied memory 204 can be used for both functions. Stage 203 may operate on luminance and/or chrominance data.

Bit stream encoding stage 207 includes all bit-stream generation for MPEG-2 encoding, i.e. circuits 103 to 108, and 110 to 117 of Fig. 1, but does not include a motion prediction circuit (circuit 109 of Fig. 1) which would require a picture data memory, e.g. a frame memory, on this chip.

Each of these main processing stages has an interface to an external memory 202, 204, and 208, as well as an interface to a controller 209, which provides for all programmable options of the encoder. This means that in connection with the above mentioned partition of the blocks of Fig. 1 into the stages 203 and 207 the content of memory 204 (for instance, pixel data of at least one field in case of storing a reference picture only, pixel data of two fields in case of storing a reference picture and a predicted picture, pixel data of three fields in case of storing a reference picture and two predicted picture for bi-directional prediction of B-pictures) needs not to be duplicated into memory 208.

Thereby memory 208 can be significantly smaller and cheaper. Stages 201, 203 and 207 may contain hardwired functionality as well as programmable circuits, such as microcontroller or microcomputer cores which operate with respective software. A further advantage is the following: Motion estimation stage 203 causes a delay of several pictures (from I to next I, or P to next P, or I to next P, or P to next I picture). Since the output data of stage 203 and the picture data on bus A is needed in stage 207 in principal at the same time, memory 208 would normally be required to adjust for the different time instances of the input data. However, since stage 201 needs for some operations a big memory, e.g. a multiple picture memory, this memory is also used to compensate for the above described time delay. The result is that the input data for stage 207 in principal arrives at the appropriate time and memory 208 can have a low capacity.

Thereby the picture data on bus A can have a delay of several pictures with respect to the corresponding picture data on bus B.

Due to this partitioning of functions, which is one aspect of the invention, each of the stages 201, 203 and 207 may be realized in one VLSI chip, since all stages contain just that many processing elements, as can be implemented on singular integrated circuits with the current state of the art VLSI technology, i.e. $0.8\mu$ 2-layer HCMOS4 technology.

Memories 202, 204 and 208 may consist of standard memory devices, such as 4MBit DRAMs, SDRAMs or other feasible memories.

It is an important part of the invention that at the input of preprocessing stage 201 standard digital video signals DVS in $YC_bC_r$ format related to ITU-R Recommendation 601 may be used, together with standard video synchronisation signals SCLK including e.g. 13.5MHz clock, whereas the interfaces between stages 201 and 203 and between stages 203 and 207 relate to a specific definition (for example, the input synchronizing signals which are related to lines and fields, are replaced by macroblock and other sync signals which are related to MPEG levels), which will be explained furtheron. The encoder output interface at stage 207 provides at its output CVBS a compressed MPEG-2 video bitstream, such as the Packetized Elementary Bitstream (PES) defined in ISO 13818, together with suitable synchronization signals. This bit-stream can be read out using the data request input DREQ. Preprocessing stage 201 is connected via a first bus A to motion estimation stage 203 and via a second bus B to bit stream encoding stage 207 for coding complexity pre-analysing purposes.

Pre-analyzing allows an additional kind of rate control within each macroblock by adjusting the relevant coding parameters like inter/intra and field/frame decision.

Preferably, bus A transfers no luminance data whereas bus B does. The interfaces of stages 201, 203 and 207 to the controller 209 are connected via a bi-directional third bus C and may use standard data, address and synchronization definitions as related to standard controller devices, such as Motorola or Texas Instruments circuits, e.g. TMS320C30. The controller 209, again, has an interface via bus SYSSV to the overall systems control, or a user interface computer, from where it receives parameters for encoder set-up, mode selection, etc.. Via bus SYSSV also encoder status information, such as error codes, may be communicated.

Specifically, stage 201 contains all pre-processing and data reordering functions, which are also the content of block 101 in Fig. 1. These functions may include horizontal and vertical filtering and decimation for the conversion from the original picture format to the encoding format, e.g. from 720 to 544 pixels per active line. As an example, conversion from so-called 4:2:2 $YC_bC_r$ organization, appropriate filtering and decimation of the chrominance signals to achieve the 4:2:0 encoding format, may be part of the processing functions in stage 201. Another important task of the circuit in stage 201 is the elimination of horizontal and vertical blanking intervals and the re-ordering of video data from field and line sequential scanning to the appropriate macroblock related scanning order which is useful for MPEG-2 encoding. Stage 201 provides different types of macroblock data, such as luminance and $YC_bC_r$ data, with their appropriate timing behavior for the subsequent processing blocks of the overall encoder. Other processing options, such as noise reduction and the detection of redundant fields in case of movie picture sequences, may be part of the functionality in stage 201. This preprocessing stage in the video encoding architecture is also responsible for detecting synchronization signals at its SCLK input and for generating synchronization signals for the respective macroblock output signals and for the rest of the encoder circuits.

Motion estimation stage 203 includes all motion estimation processing as required for MPEG-2 encoding, c.f. block 102 in Fig. 1, and includes also motion prediction functionality as described for predictor 109 in Fig. 1. Stage 207 contains the other processing elements listed in Fig. 1, in particular the DCT and its inverse, quantization and inverse quantization, run length and variable length coding functions, header assembling, and packetization. Stage 207 encodes luminance and chrominance data.

This specific partitioning of functions is suitable and advantageous, e.g. because the high speed processing of motion estimation and motion prediction and the common use of motion vectors is on the same chip.

Another specific partitioning of functions relates to bitstream generation and rate control functions as contained in the blocks 111, 112, 113 and 114 in Fig. 1. These functions can be implemented in dedicated hardware circuits in stage 207, when related to fast block, macroblock and slice level processing. All MPEG video bitstream operations and rate control functions above slice level (which require less operation speed) can be implemented on a standard controller like in stage 209.

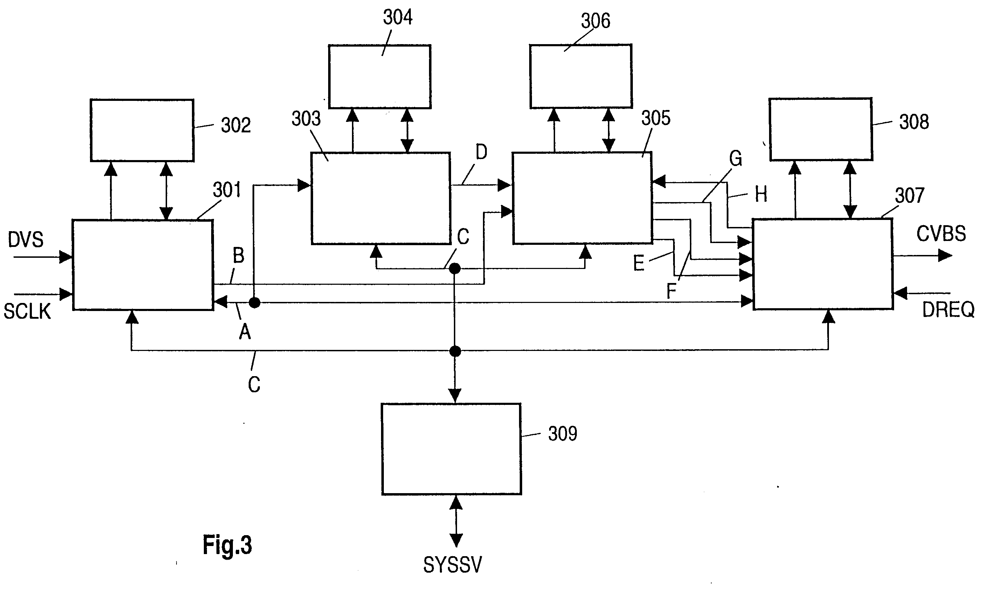

In a more detailed pictorial, Fig. 3 shows another embodiment of the invention. Stages 301 and 307 correspond to stages 201 and 207, respectively. The realization of stage 203 is now done in an alternative manner. The functionality of stage 203 is again partitioned into a coarse motion estimation stage 303 and a fine motion estimation stage 305. This hierarchical motion estimation is related to more elaborate motion estimation techniques, where more processing power is needed for implementing motion vector search procedures.

Stages 303 and 305 preferably operate on luminance only but may operate also on chrominance data. It is also possible that stage 303 operates on luminance signals only whereas stage 305 calculates fine motion vectors for luminance and chrominance signals.

If stage 303 consists of one chip, for a frame search a frame vector search area of ±64 pixels horizontally and ±32 pixels vertically can be achieved. Stage 305 can perform a full-pel search but may also calculate motion vectors having 1/2-pel accuracy. In case of full-pel search the search area is for example ±3 pixel horizontally and ±8 pixel vertically in the frame mode.

Both stages 303 and 305 are connected by a bus D transferring coarse motion vector data and have their own standard memory interfaces 304 and 306 as described with respect to Fig. 2. Controller 309 corresponds to controller 209 and is connected also to stage 303 and stage 305 via bi-directional bus C.

In this architecture, coarse motion estimation stage 303 receives its input signals from preprocessing stage 301 via bus A. The same bus is connected to bit stream encoding stage 307 for coding complexity pre-analyzing purposes. Pre-processing stage 301 provides another signal on bus B directly to fine motion estimation stage 305. Preferably, bus A transfers no luminance data whereas bus B does.

Advantageously on buses A and B video picture data is carried in a specific order, related to MPEG-2 macroblock organization, together with specific synchronization signals. The $YC_bC_r$ data on bus B may be delayed by one frame compared to the corresponding data on bus A.

On bus D data from initial motion vectors, as computed in coarse motion estimation stage 303, is carried to fine motion estimation stage 305, which computes the final motion vectors.

Bus C carries the standard controller interface signals. On bus E macroblock data (i.e. input signals of combiner 103) is carried from stage 305 to stage 307. This is the corresponding data as carried on bus B, but delayed according to the processing time in stage 305.

Bus F also transfers macroblock data (i.e. the output signals of predictor 109) from stage 305 to stage 307. This macroblock data relates to the fine motion vectors and prediction modes (i.e. input signals of blocks 115 and 116) which are calculated in stage 305 and forwarded on bus G to stage 307. Bus H carries reconstructed macroblocks (i.e. output signals of adder 108) from stage 307, which are required for the MPEG-2 prediction loop, back to stage 305. All macroblock data on buses E, F and H is accompanied by specific synchronization signals as explained below.

The data interface and related memory issues for the prediction process in MPEG-2 video encoding are solved in the invention in an advantageous way. With the bus structure depicted in Fig. 3, it is possible to keep all motion estimation and macroblock prediction tasks confined to stages 303 and 305. Consequently, all of the related memory requirements are covered by memories 304 and 306 connected to the motion estimation circuits 303 and 305. The prediction loop, as used in MPEG-2, MPEG-1 and other video encoding techniques is closed by returning the reconstructed picture data (output of adder 108 in Fig. 1), which is contained in stage 307, back to the prediction process in fine motion estimation stage 305. The remaining memory requirements of stage 307 only relate to the bitstream encoding process. Another advantage of this kind of interface between motion estimation and bitstream generation is the possibility to calculate motion vectors on reconstructed data which are available after the inverse quantizing. This improves the encoding quality in such respect that the decoding errors in a decoder can already be taken into account in the encoder. Like in Fig. 2 coarse motion estimation stage 303 causes a delay of several pictures (from I to next I, or P to next P, or I to next P, or P to next I picture). Since the output data of the subsequent fine motion estimation stage 305 and the picture data on bus A is needed in stage 307 in principal at the same time, memory 308 would normally be required to adjust for the different time instances of the input data. However, since stage 301 needs for some operations a big memory, e.g. a multiple picture memory, this memory is also used to compensate for the above described time delay. The result is that the input data for stage 307 in principal arrives at the appropriate time and memory 308 can have a low capacity. Thereby the picture data on bus A can have a delay of several pictures with respect to the corresponding picture data on bus B.

Although fine motion estimation stage 305 introduces internally a short delay (stage 305 processes in a pipeline structure eight macroblocks and transfers them together with motion information) in the output data with respect to the data on bus A it is more advantageous to spend a respective small memory capacity for stage 307, but to save a third bus from stage 301 to stage 307. Since the encoder operates at high speed a parallel bus would be required which would consume additional pins for the chips and additional space on the board carrying the chips

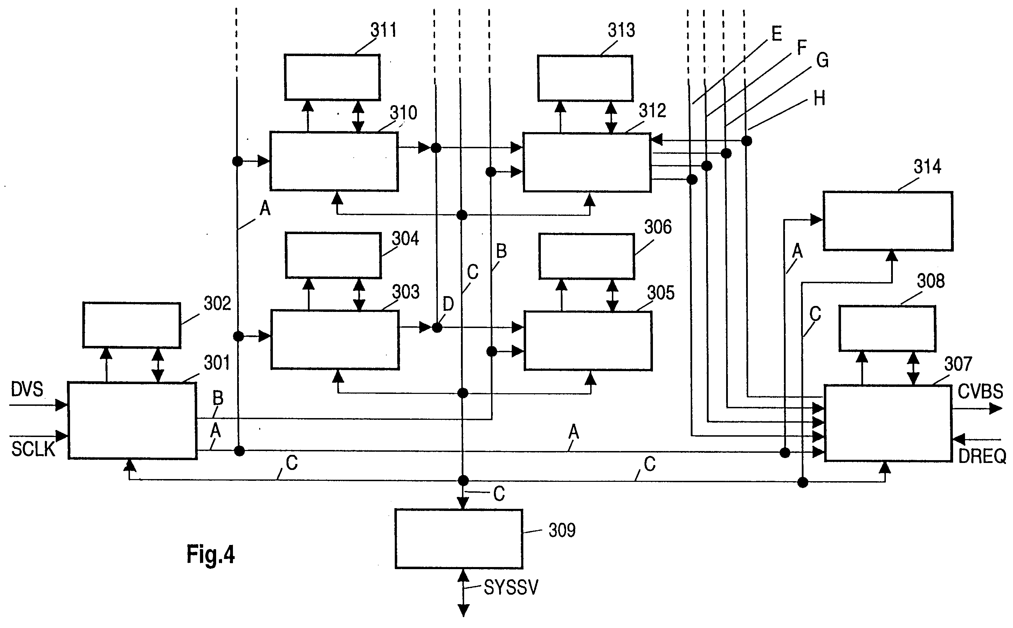

In Fig. 4, the same functionality as shown in Fig. 3 is shown again, but with two modifications which make up two more specific items of the invention. A second coarse motion estimation stage 310 and a second fine motion estimation stage 312 with their respective memories 311 and 313 are connected in parallel to stages 303 and 305, respectively. The additional stages 310 and 312 are connected to the basic architecture as shown in Fig. 3 by parallel extension of buses A, B, C, D, E, F, G, and H. This allows to extend motion vector range and/or vector accuracy by providing more processing power to the motion estimation stages 303 and 305.

This method can be used to connect even more coarse and fine motion estimator circuits, such as blocks 310 and 312, to the complete architecture. In the case of Fig. 4, stages 303 and 310 share the processing load for initial vector search. The sharing principle may be on picture boundaries or other suitable data partitioning methods, for instance on picture stripes as will be explained lateron. If shared on picture boundaries, each motion estimation circuit 303 and 310 has to store the respective pictures for its prediction task in its own memory.

Alternatively, task sharing may be related to the types of initial vectors to be calculated. As an example, in MPEG-2 forward and backward motion vectors as well as different types of field and frame vectors are needed. Stage 303 may calculate, e.g. for a present macroblock, all vectors from upper to lower fields in a picture sequence, while circuit 310 may calculate - for that macroblock - all vectors from lower to upper fields, and so on. It is also possible that coarse motion estimation stages 303 and 310 operate on a picture whereas fine motion estimation stages 305 and 312 operate on adjacent stripes in that picture. Task sharing may be organized differently for different applications by controller 309.

Advantageously, this allows to exchange vector accuracy against the number and types of vectors calculated in a programmable fashion, even if the processing power is fixed through the number of circuits provided.

In a similar manner, fine motion estimation stages 305 and 312 may share the final motion estimation and/or prediction tasks. For this purpose, all vectors calculated by stages 303 and 310 are transferred on the same bus D to the stages 305 and 312. The task sharing principle of these stages is not fixed either but may be chosen from different alternatives, such as macroblock multiplexing. In the case of macroblock multiplexing, stage 305 would take, for instance, all initial vectors determined by stages 303 or 310 for one respective macroblock and would calculate all final motion vectors with final accuracy for this macroblock, while stage 312 would receive all initial vectors for the next macroblock and would calculate its final motion vectors. Again, the sequence of multiplexing and task sharing can be determined with the help of controller 309.

The second modification shown in Fig. 4 is related to a pre-analysizer 314. Such analyzer can also be connected to the circuits shown in Fig. 2, Fig. 3, Fig. 6, Fig. 8, and Fig. 9. Analyzer 314 is connected to bus A and to bi-directional bus C. On bus A, it receives the picture data organized in macroblock fashion, as it is used for initial motion estimation in stages 303 and 310. In analyzer 314, this data is used for pre-analysis functions, such as calculating a picture or macroblock complexity metrics. Analyzer 314 may contain the same functions as stage 307 and uses the DCT, quantization, and part of the variable length coding functions for determination of complexity values. The resulting values from pre-analysis are transferred via bus C to controller 309 and can be used there for determination of appropriate encoding alternatives. Alternatively to using analyzer 314, the pre-analysis functionality can also be included in stage 207, 307. In this case, coding of $YC_bC_r$ data from bus E and pre-analyis computations on data from bus A must be multiplexed on macroblock level.

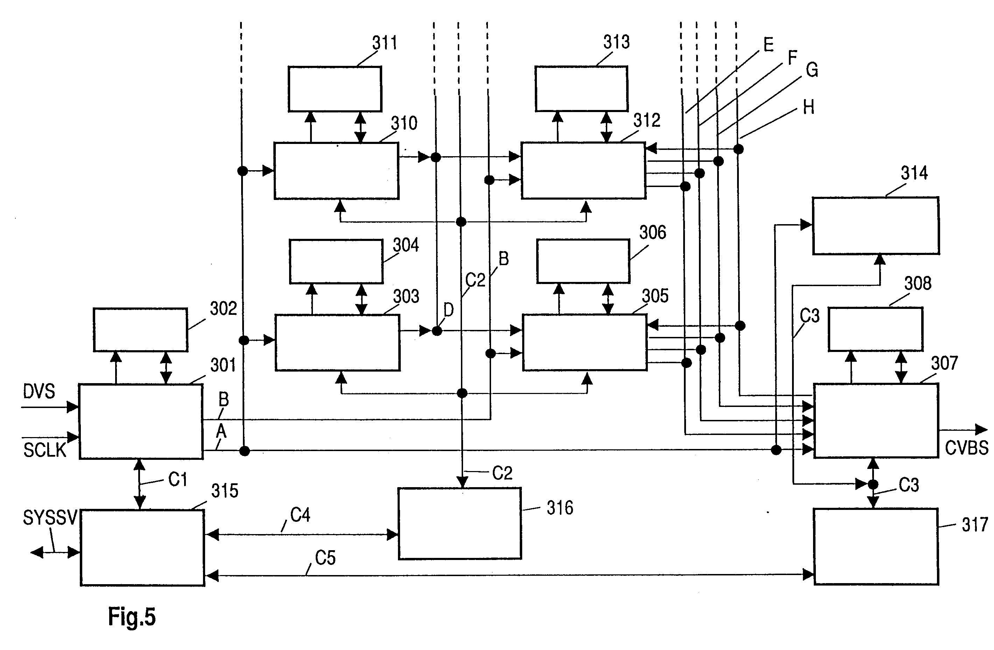

In Fig. 5, the same architecture is shown as in Fig. 4, but with a more elaborate controller section. In this configuration, three controller circuits 315, 316 and 317 share the tasks of the controller 309 shown in the previous pictures. This architecture provides for more programmable options and processing power. Controller 315 has the responsibility for system communication via bus SYSSV. It communicates also directly with pre-processing stage 301 via bi-directional bus C1, where it receives data synchronization signals and determines pre-processing set-up. On bi-directional buses C4 and C5 controller 315 communicates set-up and status information to the other controllers 316 and 317 which are connected to the motion estimation stages and bitstream encoding stages via bi-directional buses C2 and C3, respectively. In a specific embodiment of this invention, controller circuit 315 also generates the header information needed for MPEG-2 bitstreams, controller circuit 316 determines all prediction modes and the best prediction vector for each macroblock, and controller 317 covers all rate control and bitstream generation requirements above slice level.

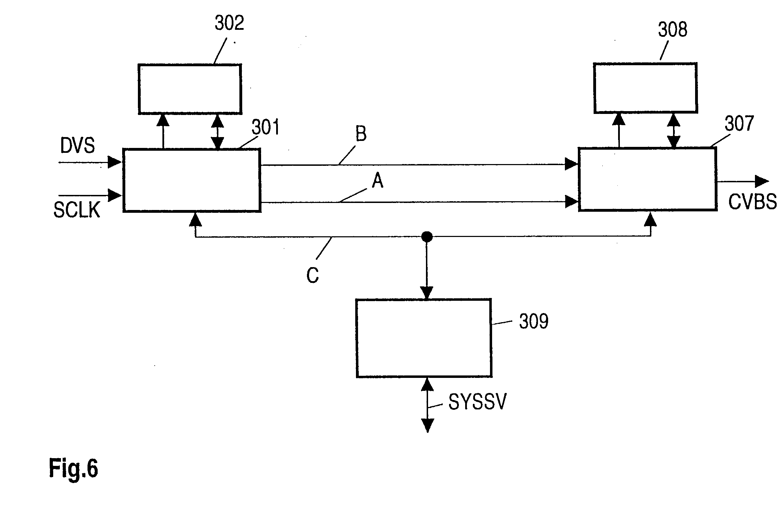

Fig. 6 depicts a simplified version of the inventive architecture which again shows the flexibility of the inventive chip set. In this embodiment, an encoder is implemented without motion estimation and consists only of a pre-processing stage 301 and a bitstream encoder stage 307 which gets its data via buses A and B from stage 301. As in other embodiments stages 301 and 307 are controlled via bi-directional bus C by a controller circuit 309.

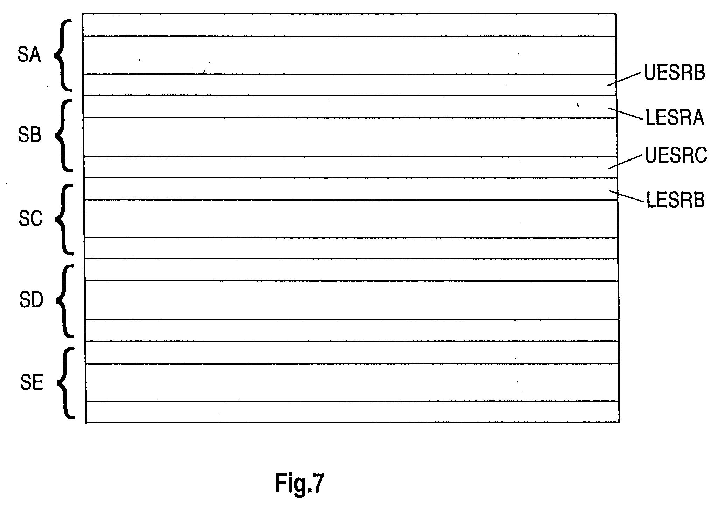

Fig. 7 illustrates the principle of encoding video pictures by stripe partitioning. Advantageously this principle can be used for pictures with higher resolution, e.g. HDTV and/or progressively scanned pictures. The high resolution picture is split into horizontal stripes SA to SE. Each stripe has less or an equal number of pixels compared to the pixel rate of ITU-R Recommendation 601.

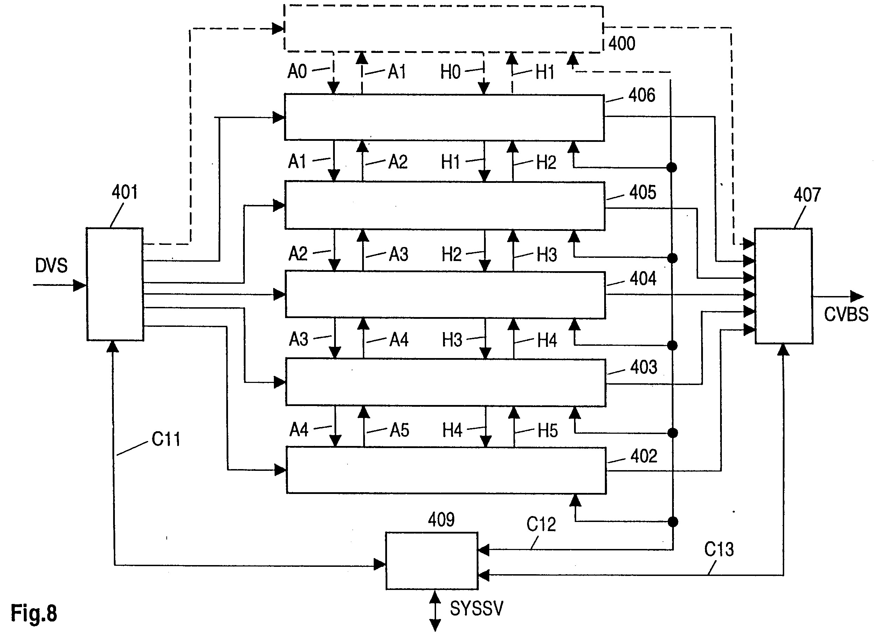

The partitioning is done by a partition stage 401 in Fig. 8 which receives at its input the digital video signal DVS. Pixel data of each stripe is forwarded to an array of video compression stripe encoders 402 to 406 (example of five stripes), each of them consisting of one embodiment as described above in connection with Fig. 2 to Fig. 6. The bit-stream output signals of each stripe encoder are fed to a combiner stage 407, which assembles the individual bit-streams into the complete compressed output video bit stream CVBS. All stripe encoders communicate macroblock data via A1 to A5 and H1 to H5 buses to enable motion vector search across boundaries. For this purpose, Fig. 7 shows the overlap regions for motion estimation, which are needed to achieve a smooth encoder behavior across stripe boundaries. UESRB is the upper extended motion estimation search range for stripe SB. LESRA is the lower extended motion estimation search range for stripe SA. UESRC is the upper extended motion estimation search range for stripe SC. LESRB is the lower extended motion estimation search range for stripe SB. This means that e.g. encoder 405 operates in a search area which covers stripe SB, UESRB, and LESRB.

Advantageously, the embodiment of Fig. 8 is easily extendable as indicated with video compression encoder 400. Overall encoder control is managed by the controller 409. This controller communicates via bi-directional bus SYSSV with a user interface or a total system, and communicates via bidirectional buses C11, C12, and C13 with partition stage 401, stripe encoders 402 to 406 and bitstream combiner stage 407.

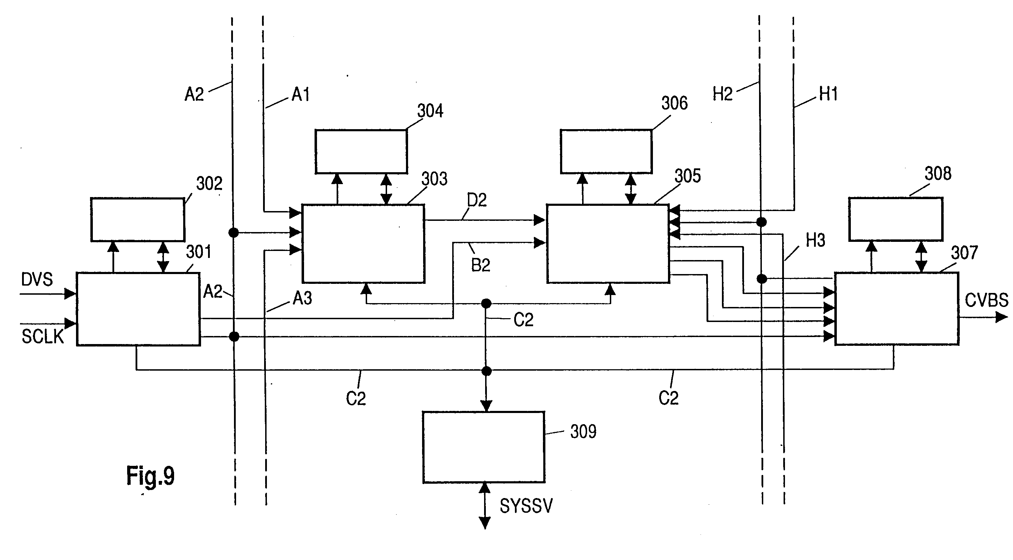

The bus extensions needed for stripe encoding with respect to an embodiment as described in connection with Fig. 3 are shown in more detail in Fig. 9 (with the bus nomenclature related to stripe SB and encoder 405). Controller 409 may replace controllers 309 or may be connected via bus C12 to the SYSSV interface of controllers 309, or the controllers 309 may have a further bus interface for bus C12. Buses A2, B2, C2, and D2 correspond to buses A, B, C, and D in Fig. 3, respectively. Stages 303 and 305 have each two further interfaces for buses A1 / A3 and H1 / H3, respectively, over which the data concerning areas UESRB and LESRB are exchanged.

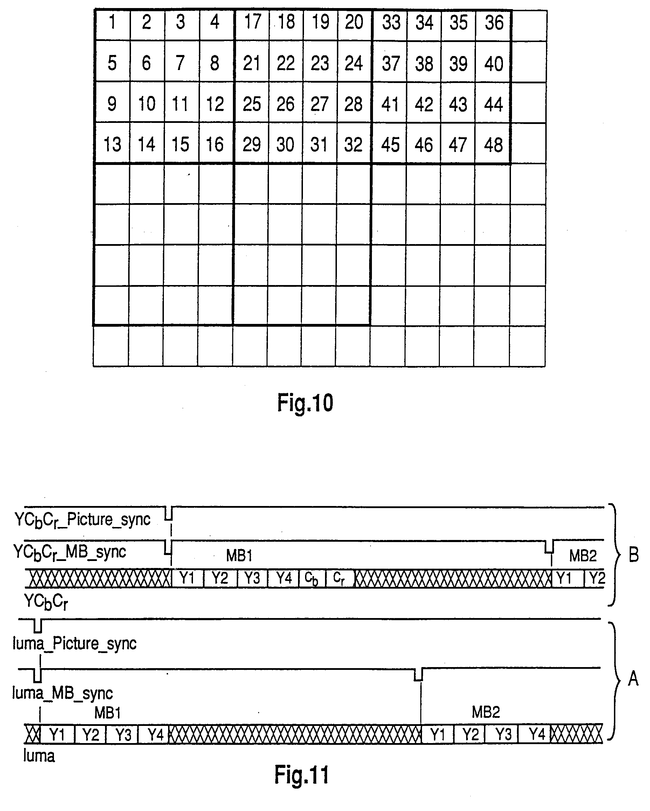

A further advantage of the invention is that the macroblocks can be processed in a special kind of sequence as depicted in Fig. 10. If e.g. stripe processing is used the macroblocks 1 to 48 shown in Fig. 10 may form such stripe. The processing order of the macroblocks is not, as usual, 1 to 4, 14 to 20, 33 to 36, ... (continued with macroblock line), 5 to 8, 21 to 24, 37 to 40, and so on, but 1 to 16, 17 to 32, 33 to 48, and so on, whereby larger blocks consisting of multiple adjacent macroblocks are formed. This allows on one side easy parallel processing in subsequent larger blocks and on the other side reduced delay memory requirements, since on macroblock line may consist of

$$\frac{720 \text{ active pixels per line}}{16 \text{ pixels per macroblock}} = 45 \text{ macroblocks}$$

and one HDTV macroblock line may consist of

$$\frac{1440 \text{ active pixels per line}}{16 \text{ pixels per macroblock}} = 90 \text{ macroblocks}$$

Buses A and B transfer a macroblock sync signal indicating to stages 203/303, 305, and 207/307 that a new macroblock has started. After the MB_sync signal, each 27MHz cycle a new 8Bit value of the macroblock is transferred until the complete luminance or $YC_bC_r$ block data is transferred. The synchronizing and timing information on buses A and B is shown in Fig. 11, whereby bus A is an 8Bit luminance bus carrying a picture sync signal 'luma_Picture_sync', a macroblock sync signal 'luma_MB_sync', and the luminance data 'luma' itself, and bus B is an 8Bit $YC_bC_r$ bus carrying a picture sync signal '$YC_bC_r$_Picture_sync', a macroblock sync signal '$YC_bC_r$_MB_sync', and the $YC_bC_r$ data '$YC_bC_r$' itself.

The $YC_bC_r$ data includes for each macroblock MB data Y1 to Y4 concerning four 8*8 luminance pixel blocks and the related chrominance data $C_b$ and $C_r$ concerning one 8*8 $C_b$ pixel block and one 8*8 $C_r$ pixel block. The luminance data includes for each macroblock MB data Y1 to Y4 concerning four 8*8 luminance pixel blocks.

The macroblock data on bus A can have the order as described with reference to Fig. 10 whereas the data on bus B can have the normal order, i.e. macroblock lines. This is in particular advantageous if several coarse motion estimation stages 303 operate in parallel due to the larger search area and the resulting required processing power when compared to fine motion estimation. Since fine motion estimation stage 305 operates only on one macroblock at a time the macroblocks can be processed in the normal order.

The parallel interfaces may use a 27MHz clock whereas the general processing clock rate is e.g. 54MHz.

The basic functions as shown in Fig. 1, as far as MPEG-1 is concerned, can be carried out with a circuitry like on the STi3230 chip of SGS-Thomson. Motion estimation and motion estimation controller circuitry as such is known from the STi3220 and STi3223 chips of SGS-Thomson. DCT and inverse DCT can be carried out using circuitry like on the IMSA121, STV3208, and STV3200 chips of SGS-Thomson.

The preprocessing stage 201, 301 is described in more detail in another European patent application EP95119202 of the applicant.

The coarse motion estimation stage 303 is described in more detail in a further patent application of the applicant (FR 9110158).

The fine motion estimation stage 305 is described in more detail in another European patent application EP95402787 of the applicant.

The bit stream encoding stage 207, 307 is described in more detail in a further European patent application EP95402786 of the applicant.

The invention can be used for e.g. digital video broadcasting, for recording and playback of digital video on compact discs, for interactive video services as well as for program contribution, ENG/SNG, video servers, non-linear editing and so forth, based on the MPEG-2 standard as well as the MPEG-1 standard.

**Claims**

1. Method for encoding digital video signals (INS, DVS) using video signal pre-processing (101; 201; 301), motion estimation (102; 203; 303, 305), and an encoding loop including a transformation step (104), a quantisation step (105), an inverse quantisation step (106), an inverse transformation step (107), a reconstruction step (108) and a pixel block prediction step (109) in which motion information (MVD, PMD) derived from said motion estimation is used for the prediction, wherein difference signals (103) between pre-processed pixel block data and predicted pixel block data and/or pre-processed pixel block data as such can be processed in said transformation step and the output signals of said quantisation step are further processed (110 to 114) to derive therefrom encoded video signals (OUS, CVBS) including information derived from said motion information, **characterised** in that the encoding is carried out using:

- a first integrated circuit for pre-processing (201; 301) input picture signals including data re-ordering and to which first picture data memory means (202; 302) are assigned;
- at least one integrated circuit (203; 303, 305) for carrying out said motion estimation and said prediction step and to which second picture data memory means (204; 304, 306) are assigned which are used for said motion estimation and for said prediction step;
- a further integrated circuit (207; 307) for carrying out at least said transformation, quantisation, inverse quantisation, inverse transformation and reconstruction steps,

wherein said first integrated circuit transfers via a first bus (B) luminance and chrominance picture data to said integrated circuit (203; 303, 305) for carrying out said motion estimation and said prediction step and this circuit exchanges (E, F, G, H) luminance and chrominance picture data with said further integrated circuit (207; 307), and wherein said first and said further integrated circuit and said integrated circuit for carrying out at least said transformation, quantisation, inverse quantisation, inverse transformation and reconstruction steps are controlled via a common bi-directional bus (C) by controlling means (209; 309; 409).

2. Method according to claim 1, wherein said integrated circuit (203) for carrying out said motion estimation and said prediction step is divided into at least one coarse motion estimation integrated circuit (303) and at least one fine motion estimation integrated circuit (305) to each of which specific memory means (304, 306) are assigned and both of which are controlled by said bi-directional bus (C), wherein said fine motion estimation integrated circuit carries out said prediction step and:

- said first integrated circuit (301) transfers via said first bus (B) luminance and chrominance picture data to said fine motion estimation integrated circuit (305);

- said coarse motion estimation integrated circuit (303) transfers via a third bus (D) coarse motion vector data to said fine motion estimation integrated circuit (305);
- said first integrated circuit (301) sends via a second bus (A) at least luminance picture data to said coarse motion estimation integrated circuit (303), whereby the picture data on said first bus (B) are appropriately delayed with respect to the corresponding picture data on said second bus (A) using said first picture data memory means (302);
- said fine motion estimation integrated circuit (305) transfers pre-processed luminance and chrominance picture data (E) and predicted luminance and chrominance picture data (F) and motion information (MVD, PMD; G) to said further integrated circuit (307), and transfers (H) output data of said reconstruction step (108) from said further integrated circuit to said fine motion estimation integrated circuit.

3. Method according to claim 1 or 2, wherein the digital video signals (INS, DVS) to be encoded are MPEG signals and the steps performed in said further integrated circuit (207; 307) are related to block, macroblock, and slice level and video bitstream operations and rate control functions above slice level are implemented using said controlling means (209; 309; 409).

4. Method according to any of claims 1 to 3, wherein for parallel processing further coarse motion estimation integrated circuits (303) and/or fine motion estimation integrated circuits (305) to each of which specific memory means (304, 306) are assigned, are connected respectively in parallel to the first (B), second (A), and third (D) bus, to the bi-directional bus (C), and to said connections to said further integrated circuit (307) which transfer pre-processed luminance and chrominance picture data (E) and predicted luminance and chrominance picture data (F) and motion information (MVD, PMD; G) to said further integrated circuit, and to said connection which transfers (H) output data of said reconstruction step (108) from said further integrated circuit to said fine motion estimation integrated circuit.

5. Method according to claim 4, wherein one set or group of coarse motion estimation integrated circuits (303) and/or fine motion estimation integrated circuits (305) performs forward motion estimation and prediction and another set or group of coarse motion estimation integrated circuits (303) and/or fine motion estimation integrated circuits (305) performs backward motion estimation and prediction.

6. Method according to any of claims 1 to 5, wherein an additional encoding pre-analysis step (314) is carried out using luminance data coming via a or said second bus (A) from said first integrated circuit (301), for the purpose of determining encoding alternatives.

7. Method for encoding digital video signals (INS, DVS) using forward and backward motion estimation (102; 203; 303, 305), **characterised** in that for parallel processing several coarse motion estimation integrated circuits (303), to each of which specific memory means (304) are assigned, and one or several fine motion estimation integrated circuits (305), to each of which specific memory means (306) are assigned and which include a macroblock motion prediction step for a subsequent bit stream encoding whereby that memory means (306) are commonly used for said fine motion estimation and for said prediction step, are connected together, wherein one set or group of coarse motion estimation integrated circuits (303) and/or fine motion estimation integrated circuits (305) performs forward motion estimation and prediction and another set or group of coarse motion estimation integrated circuits (303) and/or fine motion estimation integrated circuits (305) performs backward motion estimation and prediction and wherein all of said integrated circuits (303, 305) are controlled via a common bi-directional bus (C, C2) by controlling means (209; 309; 409; 316).

8. Method according to any of claims 1 to 7, wherein in said integrated circuit (203) for carrying out said motion estimation and said prediction step or in said fine motion estimation integrated circuit (305) motion vectors are calculated on reconstructed picture data.

9. Method according to any of claims 1 to 8, wherein the pictures to be encoded are partitioned into (401) at least two stripes (SA to SE) and the encoding and motion estimation, respectively, is performed in parallel in related paths (402 to 406, 400), and wherein data related to overlap regions (UESRB, LESRA, UESRC, LESRB) between said stripes are exchanged (A0 to A5, H0 to H5) between the paths.

10. Apparatus for encoding digital video signals (INS, DVS) using video signal pre-processing (101; 201; 301), motion estimation (102; 203; 303, 305), and an encoding loop including transformation (104), quantisation (105), inverse quantisation (106), inverse transformation (107), reconstruction (108), and pixel block prediction (109) in which motion information (MVD, PMD) derived from said motion estimation is used for the prediction, wherein difference signals (103) between pre-processed pixel block data and predicted pixel block data and/or pre-processed pixel block data as such can be processed in said transformation and the output signals of said quantisation are further processed (110 to 114) to derive therefrom encoded video signals (OUS, CVBS) including information derived from said motion information, and including:

- a first integrated circuit for pre-processing (201; 301) input picture signals including data re-ordering and to which first picture data memory means (202; 302) are assigned;
- at least one integrated circuit (203; 303, 305) for carrying out said motion estimation and said prediction and to which second picture data memory means (204; 304, 306) are assigned which are used for said motion estimation and for said prediction;
- a further integrated circuit (207; 307) for carrying out at least said transformation, quantisation, inverse quantisation, inverse transformation, and reconstruction,

wherein said first integrated circuit is connected via a first bus (B) transferring luminance and chrominance picture data to said integrated circuit (203; 303, 305) for carrying out said motion estimation and said prediction and this circuit is connected (E, F, G, H) for exchanging luminance and chrominance picture data with said further integrated circuit (207; 307), and wherein said first and said further integrated circuit and said integrated circuit for carrying out at least said transformation, quantisation, inverse quantisation, inverse transformation, and reconstruction are connected via a common bi-directional bus (C) with controlling means (209; 309; 409).

11. Apparatus according to claim 10, wherein said integrated circuit (203) for carrying out said motion estimation and said prediction is divided into at least one coarse motion estimation integrated circuit (303) and at least one fine motion estimation integrated circuit (305) to each of which specific memory means (304, 306) are assigned and both of which are connected to said bi-directional bus (C), wherein said fine motion estimation integrated circuit carries out said prediction and:

- said first integrated circuit (301) is connected via said first bus (B) transferring luminance and chrominance picture data to said fine motion estimation integrated circuit (305);
- said coarse motion estimation integrated circuit (303) is connected via a third bus (D) transferring coarse motion vector data to said fine motion estimation integrated circuit (305);
- said first integrated circuit (301) is connected via a second bus (A) to said coarse motion estimation integrated circuit (303) for sending at least luminance picture data, whereby the picture data on said first bus (B) are appropriately delayed with respect to the corresponding picture data on said second bus (A) using said first picture data memory means (302);
- said fine motion estimation integrated circuit (305) is connected to said further integrated circuit (307),

transferring pre-processed luminance and chrominance picture data (E) and predicted luminance and chrominance picture data (F) and motion information (MVD, PMD; G) to said further integrated circuit, and transferring (H) output data of said reconstruction (108) from said further integrated circuit to said fine motion estimation integrated circuit.

12. Apparatus according to claim 10 or 11, wherein for forming parallel extension further coarse motion estimation integrated circuits (303) and/or fine motion estimation integrated circuits (305) to each of which specific memory means (304, 306) are assigned, are connected respectively in parallel to the first (B), second (A), and third (D) bus, to the bi-directional bus (C), and to said connections to said further integrated circuit (307) which transfer pre-processed luminance and chrominance picture data (E) and predicted luminance and chrominance picture data (F) and motion information (MVD, PMD; G) to said further integrated circuit, and to said connection which transfers (H) output data of said reconstruction (108) from said further integrated circuit to said fine motion estimation integrated circuit.

13. Apparatus according to any of claims 10 to 12, wherein the common bi-directional bus (C2) being connected to the coarse motion estimation integrated circuit or circuits (303) and the fine motion estimation integrated circuit or circuits (305) is controlled by second control means (316) and wherein the common bi-directional bus (C3) being connected to the further integrated circuit (307) and possibly to an additional encoding pre-analysis circuit (314) for determining encoding alternatives, which operates on luminance data coming via a or said second bus (A) from said first integrated circuit (301), is controlled by third control means (317), and wherein the second and third control means are controlled by said controlling means (315).

Fig.1

Fig.2

**Fig.3**

EP 0 779 744 A2

Fig.4

EP 0 779 744 A2

Fig.5

Fig.6

Fig.7

Fig.8

EP 0 779 744 A2

19

Fig.9

| 1 | 2 | 3 | 4 | 17 | 18 | 19 | 20 | 33 | 34 | 35 | 36 | |
| 5 | 6 | 7 | 8 | 21 | 22 | 23 | 24 | 37 | 38 | 39 | 40 | |
| 9 | 10 | 11 | 12 | 25 | 26 | 27 | 28 | 41 | 42 | 43 | 44 | |
| 13 | 14 | 15 | 16 | 29 | 30 | 31 | 32 | 45 | 46 | 47 | 48 | |
| | | | | | | | | | | | | |
| | | | | | | | | | | | | |
| | | | | | | | | | | | | |
| | | | | | | | | | | | | |
| | | | | | | | | | | | | |

**Fig.10**

**Fig.11**